# EUROPEAN PATENT APPLICATION

(11) **EP 4 563 757 A1**
(43) Date of publication of application: **04.06.2025**
(21) Application number: 24212003.8
(22) Date of filing: 11.11.2024
(51) Int. Cl.: E02F 9/24, E02F 9/26

(54) **WORK MACHINE CONTROL METHOD, WORK MACHINE CONTROL PROGRAM, WORK MACHINE CONTROL SYSTEM, AND WORK MACHINE**

(30) Priority: 24.11.2023 JP 2023198792
(71) Applicant: Yanmar Holdings Co., Ltd., Osaka-shi, Osaka (JP)
(72) Inventor: DANGUCHI, Masashi, Chikugo-shi (JP); KAWAGUCHI, Daisuke, Chikugo-shi (JP)
(74) Representative: Dennemeyer & Associates S.A.

(57) **Abstract**

[Problem] A work machine control method, a work machine control program, a work machine control system, and a work machine that prevent degradation of a visual recognition property of a display screen are provided.

[Solution] The work machine control method includes: detecting a detection target Ob1 in a monitoring area around the work machine; displaying a display screen Dp1 on a display device; and displaying a detection object X10, a display mode of which is changed according to a detection result of the detection target Ob1, on the display screen Dp1. The detection object X10 is arranged along the outer peripheral edge E10 of the display screen Dp1.

## Description

### TECHNICAL FIELD

The present invention relates to a work machine control method, a work machine control program, and a work machine control system that are used for a work machine having a function to detect a detection target in a surrounding monitoring area, and to a work machine.

### BACKGROUND ART

As the related art, a work machine (work vehicle) capable of detecting an object present in the surroundings has been known (for example, see Patent Document 1). The work machine according to the related art displays an image of the surroundings of the work machine on a display unit. When a detector (detection device) detects the object present around the work machine, an edged image, which is generated by edging the image of the surroundings, is displayed on the display unit.

### PRIOR ART DOCUMENT

### PATENT DOCUMENT

Patent Document 1: Japanese Unexamined Patent Publication No. 2022-175822

### SUMMARY OF INVENTION

### TECHNICAL PROBLEM

In the related art, by displaying the edged image, a region where information can be substantially displayed on a display screen is reduced in one size, which possibly reduces visibility of state information on a state of the work machine, for example.

An object of the present invention is to provide a work machine control method, a work machine control program, a work machine control system, and a work machine that prevent degradation of a visual recognition property of a display screen.

### SOLUTION TO PROBLEM

A work machine control method according to an aspect of the present invention includes: detecting a detection target in a monitoring area around a work machine; displaying a display screen on a display device; and displaying a detection object, a display mode of which is changed according to a detection result of the detection target, on the display screen. The detection object is arranged along an outer peripheral edge of the display screen.

A work machine control program according to another aspect of the present invention is a program for causing one or more processors to execute the work machine control method.

A work machine control system according to further another aspect of the present invention includes a detection processor and a display processor. The detection processor detects a detection target in a monitoring area around a work machine.

The display processor displays a display screen on a display device. The display processor displays a detection object, a display mode of which is changed according to a detection result of the detection target, on the display screen. The detection object is arranged along an outer peripheral edge of the display screen.

A work machine according to further another aspect of the present invention includes the work machine control system and a machine body, on which the display device is mounted.

### ADVANTAGEOUS EFFECTS OF INVENTION

According to the present invention, it is possible to provide the work machine control method, the work machine control program, the work machine control system, and the work machine that prevent degradation of a visual recognition property of the display screen.

### BRIEF DESCRIPTION OF DRAWINGS

FIG. 1 is a schematic perspective view illustrating an overall configuration of a work machine according to a first embodiment.
FIG. 2 is a schematic view illustrating a hydraulic circuit of the work machine according to the first embodiment.
FIG. 3 is a schematic plan view schematically illustrating a monitoring area that is set around the work machine, and the like when the work machine according to the first embodiment is seen from above.
FIG. 4 is a schematic external view of a display device on which a display screen is displayed by a work machine control system according to the first embodiment.
FIG. 5 is a view illustrating an example of the display screen that is displayed by the work machine control system according to the first embodiment.
FIG. 6 is a view illustrating an example of the display screen that is displayed by the work machine control system according to the first embodiment.
FIG. 7 is a view illustrating an example of the display screen that is displayed by the work machine control system according to the first embodiment.
FIG. 8 is a view illustrating an example of the display screen that is displayed by the work machine control system according to the first embodiment.
FIG. 9 is a flowchart illustrating a motion example of the work machine control system according to the first embodiment.
FIG. 10 is a view illustrating an example of a display screen that is displayed by a work machine control system according to a second embodiment.
FIG. 11 is a view illustrating an example of the display screen that is displayed by the work machine control system according to the second embodiment.

### DESCRIPTION OF EMBODIMENTS

Hereinafter, a description will be made on embodiments of the present invention with reference to the accompanying drawings. Each of the following embodiments is an example that embodies the present invention, and has no intention to limit the technical scope of the present invention.

### (First Embodiment)

### [1] Overall Configuration

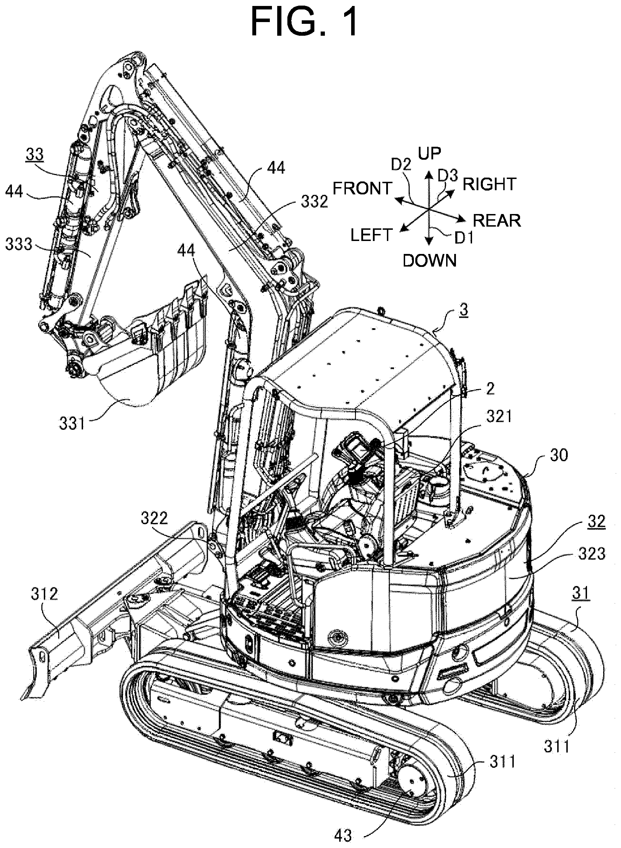

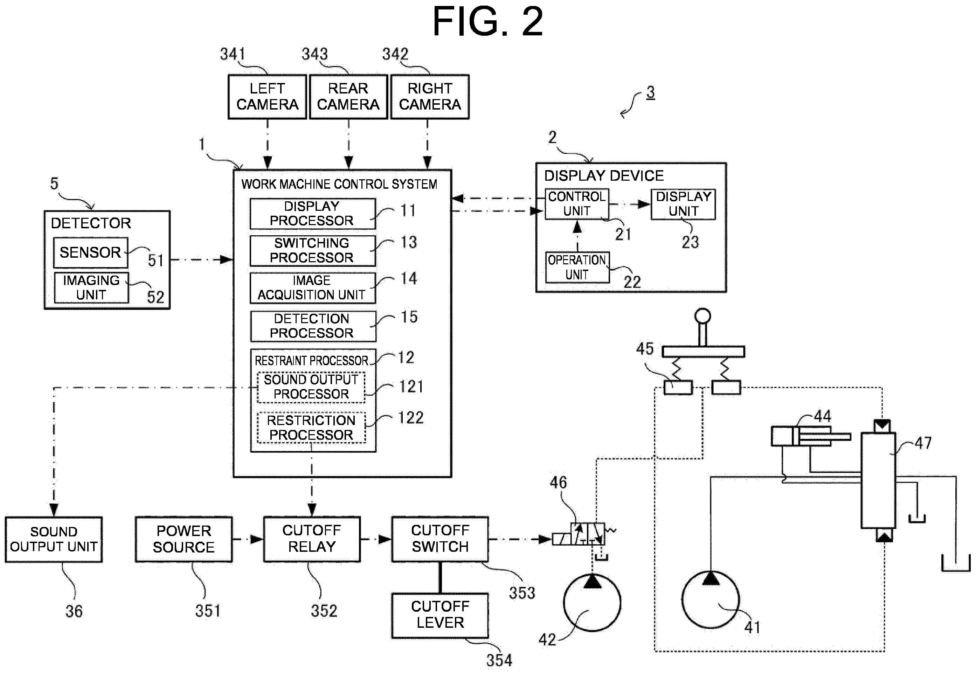

As illustrated in FIG. 1, a work machine 3 according to the present embodiment has a machine body 30 that includes a travel unit 31, a turning unit 32, and a work unit 33. As illustrated in FIG. 2, the work machine 3 further includes a work machine control system 1 (hereinafter also simply referred to as a "control system 1"). Moreover, the machine body 30 further includes a display device 2, an operation device, and the like.

The term "work machine" in the present disclosure means any of various types of work machines, and examples include work machines such as backhoes (including a hydraulic excavator, a mini excavator, and the like), a wheel loader, and a carrier. The work machine 3 includes a work unit 33 configured to be able to perform one or more types of work at least including hanging work. The work machine 3 is not limited to a "vehicle" and may be a work vessel, a work flying object such as a drone or a multicopter, or the like, for example. Furthermore, the work machine 3 is not limited to a construction machine and may be an agricultural machine such as a rice transplanter, a tractor, or a combine harvester, for example. In the present embodiment, unless otherwise specified, the work machine 3 is the backhoe with a hanging function (with a crane function), and a description will be made on a case where the work machine 3 can perform, as work, excavation work, ground leveling work, trench excavation work, loading work, or the like, in addition to the hanging work, as an example.

In addition, in the present embodiment, for convenience of description, a vertical direction in a usable state of the work machine 3 is defined as an up-down direction D1. Furthermore, in a non-turning state of the turning unit 32, a front-rear direction D2 and a left-right direction D3 are defined with a direction seen from a user (operator) who is seated in (a driving unit 321 of) the work machine 3 being a reference. In other words, each of the directions used in the present embodiment is a direction that is defined with the machine body 30 of the work machine 3 being a reference. A direction in which the machine body 30 moves during forward travel of the work machine 3 is "forward", and a direction in which the machine body 30 moves during reverse travel of the work machine 3 is "rearward". Similarly, a direction in which a front end portion of the machine body 30 during a right turn of the work machine 3 is "rightward", and a direction in which the front end portion of the machine body 30 during a left turn of the work machine 3 is "leftward". However, these directions do not intend to limit a use direction (direction during use) of the work machine 3.

The work machine 3 includes an engine as a power source. In the work machine 3, the machine body 30 is driven when a hydraulic pump 41 (see FIG. 2) is driven by the engine, and hydraulic oil is supplied from the hydraulic pump 41 to hydraulic actuators (including a hydraulic motor 43, a hydraulic cylinder 44, and the like) in the units of the machine body 30, for example. In addition, the work machine 3 is controlled when the user (operator) who is seated in the driving unit 321 of the machine body 30 operates an operation lever or the like of the operation device, for example.

In the present embodiment, it is assumed that the work machine 3 is a riding-type backhoe as described above. Thus, the work unit 33 is driven according to an operation of the user (operator) who is seated in the driving unit 321, and performs the work such as the excavation work. The driving unit 321 which the user gets in is provided in the turning unit 32.

The travel unit 31 has a travel function and is configured to be able to travel (including turning) on the ground. For example, the travel unit 31 has a pair of left and right crawlers 311, a blade 312, and the like. The travel unit 31 further has the travel hydraulic motor 43 (hydraulic actuator) and the like for driving the crawlers 311.

The turning unit 32 is located above the travel unit 31 and configured to be turnable about a rotation shaft along the vertical direction with respect to the travel unit 31. The turning unit 32 has the turning hydraulic motor (hydraulic actuator) and the like. In addition to the driving unit 321, the engine, the hydraulic pump 41, and the like are mounted on the turning unit 32. Furthermore, a boom bracket 322, to which the work unit 33 is attached, is provided in a front end portion of the turning unit 32.

The work unit 33 is configured to be able to perform the work including the hanging work. The work unit 33 is supported by the boom bracket 322 of the turning unit 32 and performs the work. The work unit 33 includes a bucket 331, a boom 332, an arm 333, and the like. The work unit 33 further has the hydraulic actuator (including the hydraulic cylinder 44, the hydraulic motor, and the like) for driving each unit.

The bucket 331 is a type of an attachment (work tool) that is attached to the machine body 30 of the work machine 3, and is any tool that is selected from plural types of attachments according to a work content. As an example, the bucket 331 is removably attached to the machine body 30 and is replaced according to the work content. In addition to the bucket 331, examples of the attachment for the work machine 3 include various tools such as a breaker, an auger, a crusher, a fork, a fork claw, a steel frame cutter, an asphalt milling machine, a mower, a ripper, a mulcher, a tilt rotator, and a tamper. The work unit 33 drives the bucket 331 with power from a drive device to perform the work.

The boom 332 is rotatably supported by the boom bracket 322 of the turning unit 32. More specifically, the boom 332 is supported by the boom bracket 322 in a manner to be rotatable about a rotation axis along a horizontal direction. The boom 332 has a shape that extends upward from a base end portion, which is supported by the boom bracket 322. The arm 333 is coupled to a distal end of the boom 332. The arm 333 is supported by the boom 332 in a manner to be rotatable about a rotation axis along the horizontal direction. The bucket 331 is attached to a distal end of the arm 333.

The work unit 33 acts when receiving the power from the engine as the power source. More specifically, when the hydraulic pump 41 is driven by the engine, and the hydraulic oil is supplied from the hydraulic pump 41 to the hydraulic actuator (the hydraulic cylinder 44 and the like) of the work unit 33, sections (the bucket 331, the boom 332, and the arm 333) of the work unit 33 act.

In the present embodiment, in particular, the work unit 33 has an articulated structure in which the boom 332 and the arm 333 are independently rotatable. That is, due to the rotation of each of the boom 332 and the arm 333 about the rotation axis along the horizontal direction, for example, the articulated work unit 33 including the boom 332 and the arm 333 can be extended or retracted as a whole.

Similar to the work unit 33, the travel unit 31 and the turning unit 32 also act when receiving the power from the engine as the power source. That is, when the hydraulic oil is supplied from the hydraulic pump 41 to the hydraulic motor 43 of the travel unit 31, the hydraulic motor of the turning unit 32, and the like, the turning unit 32 and the travel unit 31 act.

As described above, the engine functions as the power source that supplies the power to each unit. Here, together with the hydraulic pump 41 and the like, the engine is mounted on the turning unit 32. In the present embodiment, as an example, the engine is a diesel engine. The engine is driven by fuel (light fuel herein) supplied from a fuel tank.

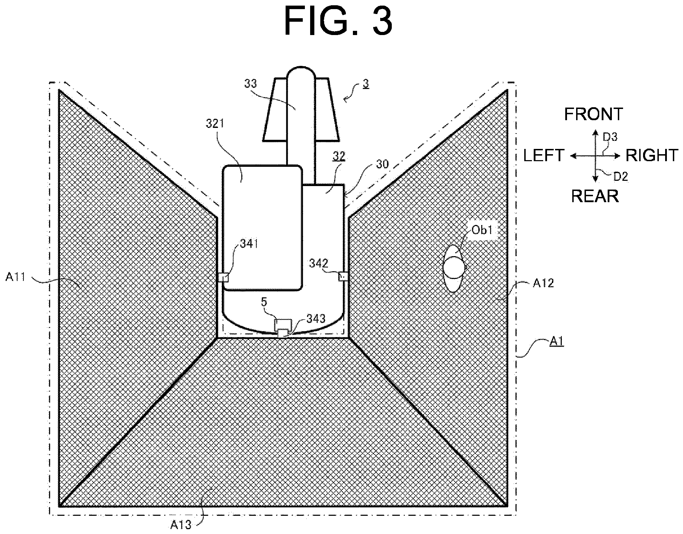

Here, the machine body 30 includes various types of sensors (including a camera) for detecting a detection target Ob1 (see FIG. 3) in a monitoring area A1 (see FIG. 3) around the work machine 3, and the various types of the sensors include the camera that captures an image of the surroundings of the machine body 30. As illustrated in FIG. 3, in the present embodiment, as an example, plural (three herein) cameras (imaging devices) including a left camera 341, a right camera 342, and a rear camera 343 are mounted on the turning unit 32 of the machine body 30. Furthermore, as illustrated in FIG. 3, a detector 5 that detects the detection target Ob1 in the monitoring area A1 is mounted on the turning unit 32 of the machine body 30.

The left camera 341, the right camera 342, and the rear camera 343 are connected to the control system 1 and each output a captured image to the control system 1. FIG. 3 is a plan view in which the work machine 3 is seen from above, and schematically illustrates the monitoring area A1, which is set around the work machine 3, the detection target Ob1, and the machine body 30 (including the left camera 341, the right camera 342, and the rear camera 343) of the work machine 3.

The left camera 341, the right camera 342, and the rear camera 343 are respectively installed to be directed leftward, rightward, and rearward with the driving unit 321 being a reference, so as to be able to capture images of the monitoring area A1 on the left side, the right side, and the rear side when seen from the operator who is seated in the driving unit 321 of the turning unit 32. That is, as illustrated in FIG. 3, the monitoring area A1 includes plural (three herein) small areas A11, A12, A13, and the left camera 341 captures an image of the small area A11 (left area) on the left side of these when seen from the operator who is seated in the driving unit 321. Similarly, the right camera 342 captures an image of the small area A12 (right area) on the right side when seen from the operator who is in the driving unit 321, and the rear camera 343 captures an image of the small area A13 (rear area) on the rear side when seen from the operator who is seated in the driving unit 321. In this way, the left camera 341, the right camera 342, and the rear camera 343 can cover the areas on the lateral sides (left side and right side) and the rear side, which tend to be blind spots for the operator.

The detector 5 is connected to the control system 1 and outputs a detection result of the detection target Ob1 in the monitoring area A1 to the control system 1. Here, as an example, the detector 5 is installed to face rearward, so as to be able to detect the detection target Ob1 in the monitoring area A1 with the monitoring area A1 that can be imaged by the left camera 341, the right camera 342, and the rear camera 343 being a target. That is, a detection range of the detection target Ob1 by the detector 5 is the same as the imageable range (monitoring area A1) by the left camera 341, the right camera 342, and the rear camera 343.

In the present embodiment, the detector 5 includes a sensor 51 (see FIG. 2) and an imaging unit 52 (see FIG. 2). The sensor 51 is a three-dimensional sensor that measures a distance to the detection target Ob1 by a Time Of Flight (TOF) method for measuring a distance to a ranging point on the basis of a round-trip time of a radio wave, light, sound, or the like to the ranging point. The sensor 51 is a ranging sensor, such as a millimeter-wave radar, that uses the radio wave as a medium to identify the distance to the detection target Ob1, an azimuth in which the detection target Ob1 is present, and the like. The imaging unit 52 is a camera (including an image sensor and optical elements) that captures an image of a detection region by the sensor 51 (the monitoring area A1). Just as described, in the case where the detection target Ob1 is present in the monitoring area A1, the detector 5, in which the sensor 51 and the imaging unit 52 are combined, can identify a three-dimensional position and attributes (shape, size, color, motion, and the like) of the detection target Ob 1.

That is, the detection result by the detector 5 may include presence or absence of the detection target Ob1 in the monitoring area A1, the position of the detection target Ob1 in the monitoring area A1 when the detection target Ob1 is present in the monitoring area A1, the attributes of the detection target Ob1, and the like.

In short, the detector 5 detects the detection target Ob1 in the monitoring area A1 around the work machine 3. The detector 5 determines whether the detection target Ob1 is present in the monitoring area A1 (presence or absence), and outputs a detection result indicating whether the detection target Ob1 is present in the monitoring area A1. In the present embodiment, as an example, the detection target Ob1 is a "person". That is, in the case where the "person" enters the monitoring area A1 around the work machine 3 as a result of movement of the work machine 3 or movement of the "person" around the work machine 3, the detector 5 detects the "person" as the detection target Ob1. In the case where the plural detection target objects Ob1 are present in the monitoring area A1, the detector 5 may also detect the number of the detection targets Ob1 (the number of the persons).

FIG. 2 schematically illustrates a hydraulic circuit and an electric circuit (electrical connection relationships) of the work machine 3 according to the present embodiment. In FIG. 2, solid lines represent high-pressure oil paths (for the hydraulic oil), dotted lines represent low-pressure oil paths (for pilot oil), and one-dot chain arrows represent electric signal paths.

As illustrated in FIG. 2, the work machine 3 includes a pilot pump 42, a remote control valve 45, a control valve 46, a direction switching valve (control valve) 47, and the like, in addition to the hydraulic pump 41, the hydraulic motor 43 (not illustrated in FIG. 2), and the hydraulic cylinder 44.

The hydraulic oil from the hydraulic pump 41, which is driven by the engine, is supplied to the hydraulic motor 43 of the travel unit 31, the hydraulic motor of the turning unit 32, the hydraulic cylinder 44 of the work unit 33, and the like. Thus, the hydraulic actuators such as the hydraulic motor 43 and the hydraulic cylinder 44 are driven.

The hydraulic actuators such as the hydraulic motor 43 and the hydraulic cylinder 44 are each provided with the pilot-type direction switching valve 47 capable of switching a direction and a flow rate of the hydraulic oil from the hydraulic pump 41. The direction switching valve 47 is driven when supplied with the pilot oil that serves as an input command from the pilot pump 42.

Here, for example, the remote control valve 45 is provided in the pilot oil supply path to the direction switching valve 47 that corresponds to the hydraulic cylinder 44 of the work unit 33. The remote control valve 45 outputs a work operation command of the work unit 33 in response to an operation of the operation lever. The work operation command instructs extending motion, retracting motion, and the like of the work unit 33. The electromagnetic control valve 46 (electromagnetic valve) is inserted between the remote control valve 45 and the pilot pump 42. The control valve 46 is connected to a power source 351 via a cutoff relay 352 and a cutoff switch 353, and acts according to a supply current from the power source 351.

Similarly, a remote control valve is provided in the pilot oil supply path to the direction switching valve that corresponds to the hydraulic motor 43 of the travel unit 31. This remote control valve outputs a travel operation command of the travel unit 31 in response to the operation of the operation lever. The travel operation command instructs travel motion (forward travel, reverse travel, or the like) of the travel unit 31. Furthermore, the remote control valve is also provided in the pilot oil supply path to the direction switching valve that corresponds to the hydraulic motor of the turning unit 32. This remote control valve outputs a turning operation command of the turning unit 32 in response to the operation of the operation lever. The turning operation command instructs turning motion (left turn, right turn, or the like) of the turning unit 32. The electromagnetic control valve 46 (electromagnetic valve) is also inserted between these remote control valve and pilot pump 42. The control valve 46 is connected to a power source 351 via a cutoff relay 352 and a cutoff switch 353, and acts according to a supply current from the power source 351.

In an energized state, that is, in a state where the current is supplied, the control valve 46 opens a pilot oil flow path from the pilot pump 42 to the remote control valve 45. In an unenergized state, that is, in a state where the current supply is cut off, the control valve 46 blocks the pilot oil flow path. Accordingly, when the supply current to the control valve 46 is cut off, the hydraulic actuator that corresponds to the remote control valve 45 cannot no longer be driven, and the output of the hydraulic actuator is forcibly stopped regardless of the operation of the operation lever.

Here, the cutoff relay 352 is connected to the control system 1, and is switched between on/off in response to a control signal (electric signal) from the control system 1. The cutoff switch 353 is switched between on/off according to an operation of a cutoff lever 354, and is turned on in a state where the cutoff lever 354 is operated downward, for example. Accordingly, when both of the cutoff relay 352 and the cutoff switch 353 are turned on, the control valve 46 is brought into the energized state, and the pilot oil flow path from the pilot pump 42 to the remote control valve 45 is opened. Thus, the hydraulic actuator is driven in response to the operation of the operation lever. Meanwhile, in a state where at least one of the cutoff relay 352 and the cutoff switch 353 is off, the control valve 46 is brought into the unenergized state, and the pilot oil flow path is blocked. Thus, the hydraulic actuator can no longer be driven.

For example, in the off state of at least one of the cutoff relay 352 and the cutoff switch 353, which are connected to the control valve 46 inserted between the pilot pump 42 and the remote control valve corresponding to the hydraulic motor of the turning unit 32, the hydraulic motor of the turning unit 32 cannot be driven. In this state, since the output from the hydraulic actuator (hydraulic motor of the turning unit 32) is forcibly stopped irrespective of the operation of the operation lever, the turning motion of the turning unit 32 is prohibited.

The cutoff lever 354 is arranged in the driving unit 321 of the machine body 30 and accepts an operation input by the user (operator). In the present embodiment, as an example, the cutoff lever 354 is operable along the up-down direction D1. The cutoff switch 353 is "off" when the cutoff lever 354 is at an "up position", which is an upper end position within a movable range, and the cutoff switch 353 is "on" when the cutoff lever 354 is at a "down position", which is a lower end position within the movable range.

Accordingly, when the cutoff lever 354 is at the "down position", the hydraulic actuator (hydraulic motor of the turning unit 32) is driven by the operation of the operation lever. In contrast, when the cutoff lever 354 is at the "up position", the output of the hydraulic actuator is forcibly stopped irrespective of the operation of the operation lever. Accordingly, in order to drive the hydraulic actuator, the user (operator) has to operate the cutoff lever 354 to the "down position".

In the present embodiment, a state of the cutoff lever 354 at the time when the cutoff lever 354 is at the "up position", that is, when the work machine 3 is inoperable is defined as a "locked state". Meanwhile, the state of the cutoff lever 354 at the time when the cutoff lever 354 is at the "down position", that is, when the work machine 3 is operable is defined as an "unlocked state".

In short, the cutoff switch 353, when being off, is in the "locked state" where the motion of the work machine 3 is restricted (including prohibited), and when being on, is in the "unlocked state" where the motion of the work machine 3 is not restricted. Then, when the cutoff lever 354 is at the "up position", and the cutoff switch 353 is in the locked state (off), the motion of the work machine 3 is forcibly restricted regardless of the operation of an operation device 35. The cutoff lever 354 is a lever that is operated to lock the motion of the work machine 3, just as described, and is synonymous with a gate lock lever.

The control system 1 mainly includes a computer system that has one or more processors, such as a central processing unit (CPU), and one or more pieces of memory, such as read only memory (ROM) and random access memory (RAM), and executes various types of processing (information processing). In the present embodiment, the control system 1 is an integrated controller that controls the entire work machine 3, and includes an electronic control unit (ECU), for example. However, the control system 1 may be provided separately from the integrated controller. The control system 1 will be described in detail in "[2] Configuration of Control System".

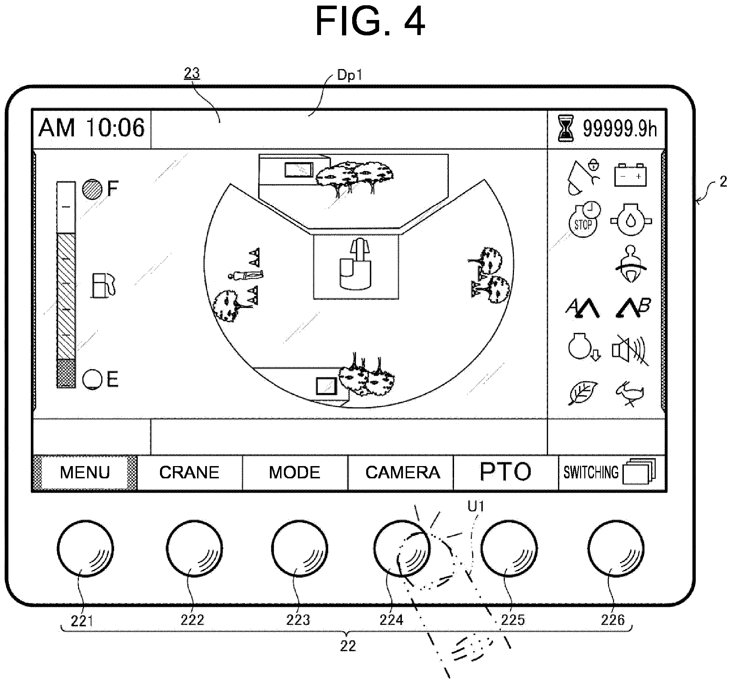

The display device 2 is arranged in the driving unit 321 of the machine body 30, and is a user interface that accepts an operation input by the user (operator) and outputs various types of information to the user. For example, the display device 2 outputs an electrical signal that corresponds to the user's operation and thereby accepts the various types of the user's operations. This enables the user (operator) to visually recognize a display screen Dp1 (see FIG. 4) that is displayed on the display device 2 and to operate the display device 2 when necessary.

As illustrated in FIG. 2, the display device 2 includes a control unit 21, an operation unit 22, and a display unit 23. The display device 2 is configured to be communicable with the control system 1 and can exchange data with the control system 1. In the present embodiment, as an example, the display device 2 is a dedicated device used for the work machine 3.

The control unit 21 controls the display device 2 according to the data from the control system 1. More specifically, the control unit 21 outputs an electrical signal that corresponds to the user's operation accepted by the operation unit 22, and displays the display screen Dp1, which is generated by the control system 1, on the display unit 23.

The operation unit 22 is a user interface for accepting an operation input by the user (operator) on the display screen Dp1 that is displayed on the display unit 23. For example, the operation unit 22 outputs an electrical signal that corresponds to an operation performed by a user U1 (see FIG. 4), and thereby accepts various operations by the user U1. In this embodiment, as one example, as illustrated in FIG. 4, the operation unit 22 includes plural (six herein) mechanical push-button switches 221 to 226. These plural push-button switches 221 to 226 are arranged in the vicinity of (below in the example of FIG. 4) a display region in a manner to follow a peripheral edge of the display area of the display unit 23. These plural push-button switches 221 to 226 correspond to items displayed on the display screen Dp1, which will be described below. When any of the plural push-button switches 221 to 226 is operated, the respective item on the display screen Dp1 is operated (selected).

The operation unit 22 may include a touch panel, an operation dial, or the like. Also, in this case, by operating the operation unit 22, any of the items on the display screen Dp1 is operated (selected).

The display unit 23 is a user interface, such as a liquid-crystal display or organic EL display displaying various types of the information, for presenting the information to the user U1 (operator). The display unit 23 displays and presents the various types of the information to the user. In the present embodiment, as an example, the display unit 23 is a full-color liquid-crystal display with a backlight, and has a "laterally long" display region that is long in a lateral direction as illustrated in FIG. 4.

On the display screen Dp1, the display device 2 presents the various types of the information to the user U1 (operator) who operates the work machine 3. That is, the user U1 who operates the work machine 3 can visually acquire the various types of the information on the work machine 3 by seeing the display screen Dp1 that is displayed on the display device 2. As an example, when the display device 2 displays information on a running state of the work machine 3, such as a coolant temperature and a hydraulic oil temperature, the user U1 can check, on the display device 2, the information on the running state of the work machine 3 that is required to operate the work machine 3. The display device 2 can also display, on the display screen Dp1, the images of the surroundings of the work machine 3 (images of the monitoring area A1) that are captured by the left camera 341, the right camera 342, and the rear camera 343. This enables the user U1 (operator) who operates the work machine 3 to check situations on the sides, behind, and the like of the work machine 3, which tend to be the blind spots from the driving unit 321, by seeing the display screen Dp1 displayed on the display device 2.

Furthermore, the work machine 3 includes the sound output unit 36 (see FIG. 2) that outputs sound (including voice) to the user U1 (operator). The sound output unit 36 includes a buzzer, a speaker, or the like, and outputs sound when receiving the electric signal. The sound output unit 36 is connected to the control system 1 and outputs the sound, such as a beep or the voice, in response to a sound control signal from the control system 1. In the present embodiment, similar to the display device 2, the sound output unit 36 is provided in the driving unit 321 of the machine body 30. The sound output unit 36 may integrally be provided with the display device 2.

In addition to the above-described components, the machine body 30 includes the operation lever, a communication terminal, the fuel tank, a battery, and the like. Furthermore, the machine body 30 includes sensors for monitoring the running state of the machine body 30, such as a coolant temperature sensor, a hydraulic oil temperature sensor, a tachometer that measures an engine speed, and an hour meter that measures a running time. Moreover, the machine body 30 includes other sensors that detect states of the cutoff lever 354, a starter key switch, and the like.

### [2] Configuration of Control System

Next, a description will be made on a configuration of the control system 1 according to the present embodiment with reference to FIG. 2. The control system 1 controls the display device 2 and thereby causes the display device 2 to display the display screen Dp1. In the present embodiment, as described above, the display device 2 is mounted on the machine body 30 of the work machine 3. The control system 1 is a component of the work machine 3 and constitutes the work machine 3 with the machine body 30 and the like. In other words, the work machine 3 according to the present embodiment at least includes the control system 1 and the machine body 30 (including the travel unit 31, the turning unit 32, and the work unit 33) mounted on the display device 2.

The term "screen" such as the display screen Dp1 in the present disclosure means a video (image) displayed on the display device 2 and includes a graphic image, a figure, a photograph, text, a moving image, and the like. That is, the control system 1 can display the display screen Dp1 on the display device 2, and the display screen Dp1 includes the graphic images representing the information on the running state of the work machine 3 such as the coolant temperature and the hydraulic oil temperature, and the like. Here, in the case where the display screen Dp1 includes the video and the like, the display screen Dp1 includes a still picture but includes a video that changes every moment.

As illustrated in FIG. 2, the control system 1 includes a display processor 11, a restraint processor 12, a switching processor 13, an image acquisition unit 14, and a detection processor 15. In the present embodiment, as an example, the control system 1 has, as the main component, the computer system having the one or more processors. Accordingly, when the one or more processors executes a work machine control program, these plural functional units (the display processor 11 and the like) are realized. These plural functional units included in the control system 1 may be provided separately in plural casings or may be provided in a single casing.

The control system 1 is configured to be communicable with the device that is provided to each part of the machine body 30. That is, at least the display device 2, the detector 5, the sound output unit 36, the cutoff relay 352, the left camera 341, the right camera 342, the rear camera 343, and the like are connected to the control system 1. Accordingly, the control system 1 can control the display device 2, the sound output unit 36, and the like, control the cutoff relay 352 to control the control valve 46, and acquire the detection result by the detector 5 and the images captured by the left camera 341, the right camera 342, the rear camera 343, and the like. Here, the control system 1 may exchange the various types of the information (data) with each of the devices either directly or indirectly via a relay or the like.

The image acquisition unit 14 executes image acquisition processing to acquire the captured image of the monitoring area A1 around the work machine 3. In the present embodiment, the image acquisition unit 14 regularly or irregularly acquires the output of the left camera 341, the right camera 342, and the rear camera 343 from the left camera 341, the right camera 342, and the rear camera 343, respectively. That is, the image acquisition unit 14 acquires the image data (captured image) of the monitoring area A1 (each of the small areas A11, A12, A13) around the work machine 3. The data acquired by the image acquisition unit 14 is stored in the memory or the like, for example.

The detection processor 15 executes detection processing to detect the detection target Ob1 in the monitoring area A1. In the present embodiment, since the detector 5 detects the detection target Ob1 in the monitoring area A1, the detection processor 15 detects the detection target Ob1 in the monitoring area A1 by acquiring the detection result by the detector 5 from the detector 5.

The restraint processor 12 executes restraint processing to restrain the motion of the work machine 3 on the basis of the detection result by the detector 5. In the present embodiment, in the case where the detection result by the detector 5 is a result that indicates the presence of the detection target Ob1 (the person herein) in the monitoring area A1, the restraint processor 12 executes the restraint processing. The term "restraint processing" in the present disclosure means processing that relates to the motion of the work machine 3 and suppresses the motion of the work machine 3 in some way. As an example, the restraint processing includes processing to indirectly restrain the motion of the work machine 3 by warning the user U1 (operator) who operates the work machine 3 by the sound or the light (including the display). Furthermore, the restraint processing includes processing to directly restrain the motion of the work machine 3 by controlling the travel unit 31, the turning unit 32, the work unit 33, and the like of the work machine 3.

In the present embodiment, the restraint processor 12 includes a sound output processor 121 and a restriction processor 122.

In the case where the detection target Ob1 is present in the monitoring area A1, the sound output processor 121 controls the sound output unit 36 to cause the sound output unit 36 to output notification sound from the sound output unit 36. That is, in the present embodiment, the restraint processing includes sound output processing to output the notification sound. The notification sound may be a simple beep or may be the voice, such as a message "Please be careful". Furthermore, the notification sound may be changed according to the detection result by the detector 5 (the distance from the machine body 30 to the detection target Ob1, or the like). In this way, the motion of the work machine 3 can be restrained indirectly by warning the user U1 (operator), who operates the work machine 3, using the notification sound. Thus, there is a high degree of freedom in the operation of the work machine 3. That is, when the user U1 operates the work machine 3 while paying attention to the detection target Ob1, it is possible to continue the motion of the work machine 3 while contact with the detection target Ob1 is avoided.

In the case where the detection target Ob1 is present in the monitoring area A1, the restriction processor 122 turns off the cutoff relay 352 by controlling the cutoff relay 352. Consequently, the control valve 46, which is connected to the power source 351 via the cutoff relay 352, is brought into the unenergized state, and the output of the hydraulic actuator corresponding to the control valve 46 is forcibly stopped. That is, in the present embodiment, the restraint processing includes restriction processing to restrict the motion of the work machine 3. The term "restriction processing" in the present disclosure means processing that relates to the motion of the work machine 3 and restricts the motion of the work machine 3 in some way. Examples of the restriction processing include processing to prohibit the travel motion of the travel unit 31 (disable the travel motion), processing to prohibit the turning motion of the turning unit 32 (disable the turning motion), and processing to prohibit the motion of the work unit 33 (disable the work). In this way, the motion of the work machine 3 can be restricted forcibly without relying on the operation by the user U1 (operator). That is, it is possible to avoid contact of the machine body 30 with the detection target Ob1, which is caused by the motion of the work machine 3.

Here, the restriction processing that is executed by the restriction processor 122 at least includes processing to restrict the turning motion of the turning unit 32. More specifically, the restriction processor 122 is configured to be able to control the cutoff relay 352 that is connected to the control valve 46 corresponding to the hydraulic motor of the turning unit 32 and turn off the cutoff relay 352 when the detection target Ob1 is present in the monitoring area A1. In this way, when the detection target Ob1 is present in the monitoring area A1, the hydraulic motor of the turning unit 32 cannot be driven, and the turning unit 32 is emergently stopped during the turning motion of the turning unit 32, or the turning motion of the turning unit 32 is prohibited when the turning unit 32 is not performing the turning motion. That is, in the present embodiment, the work machine 3 includes the travel unit 31 and the turning unit 32 that can turn with respect to the travel unit 31. The restriction processing at least restricts the turning motion of the turning unit 32. In this way, when the detection target Ob1 is present in the monitoring area A1, which is the blind spot for the user U1 (operator), it is possible to avoid the contact of the machine body 30 with the detection target Ob1, which is caused by turning of the turning unit 32.

The switching processor 13 switches between an enabled state and a disabled state of the detection processor 15. That is, the switching processor 13 switches between an enabled state and a disabled state of the function related to the detection processing for the detection target Ob1 in the monitoring area A1 by the detection processor 15. In short, the detection processor 15 is not always enabled but can be switched between the enabled state and the disabled state. In the case where the detection processor 15 is enabled, and the detection target Ob1 is present in the monitoring area A1, the detection target Ob1 is detected by the detection processor 15. Thus, the restraint processor 12 executes the restraint processing. Meanwhile, in the case where the detection processor 15 is disabled, the detection target Ob1 is not detected by the detection processor 15 even when the detection target Ob1 is present in the monitoring area A1. Thus, the restraint processor 12 does not execute the restraint processing.

In the present embodiment, depending on whether to actuate the detector 5, the switching processor 13 switches between the enabled state and the disabled state of the detection processor 15. That is, the switching processor 13 actuates the detector 5 when the detection processor 15 is enabled. The switching processor 13 does not actuate the detector 5 when the detection processor 15 is disabled. In this way, when the detection processor 15 is disabled, power consumption by the detector 5 can be suppressed.

However, the configuration of the switching processor 13 is not limited thereto. The switching processor 13 may disable the detection processor 15 by disabling the detection processing by the detection processor 15 (acquisition of the detection result from the detector 5), disabling the acquired detection result, or the like. In this case, when the detection processor 15 is disabled, the detector 5 itself is actuated. However, even in the case where the detection target Ob1 is present in the monitoring area A1, the restraint processor 12 does not execute the restraint processing. In short, the switching processor 13 may disable the detection processor 15 by disabling the processing using the detection result by the detector 5.

In the present embodiment, as an example, the enabled state and the disabled state of the detection processor 15 are switched when the user U1 (operator) operates the display device 2. That is, when the user U1 operates the operation unit 22 of the display device 2 to enable the detection processor 15, the switching processor 13 accepts this operation to enable the detection processor 15. Meanwhile, when the user U1 operates the operation unit 22 of the display device 2 to disable the detection processor 15, the switching processor 13 accepts this operation to disable the detection processor 15.

In the present embodiment, the restraint processing executed by the restraint processor 12 includes the sound output processing executed by the sound output processor 121 and the restriction processing executed by the restriction processor 122. Just as described, the restraint processing includes plural types of specific processing (the sound output processing, the restriction processing, and the like) for restraining the motion of the work machine 3. Here, in the restraint processing, each type of the specific processing can be switched independently between an enabled state and a disabled state. That is, the switching processor 13 can switch between the enabled state and the disabled state of each of the sound output processor 121 and the restriction processor 122 in the restraint processor 12. As an example, the sound output processor 121 can be enabled, and the restriction processor 122 can be disabled. Alternatively, the sound output processor 121 can be disabled, and the restriction processor 122 can be enabled. In this way, depending on the situation, it is possible to only enable the necessary specific processing, which improves a degree of freedom in the restraint processing.

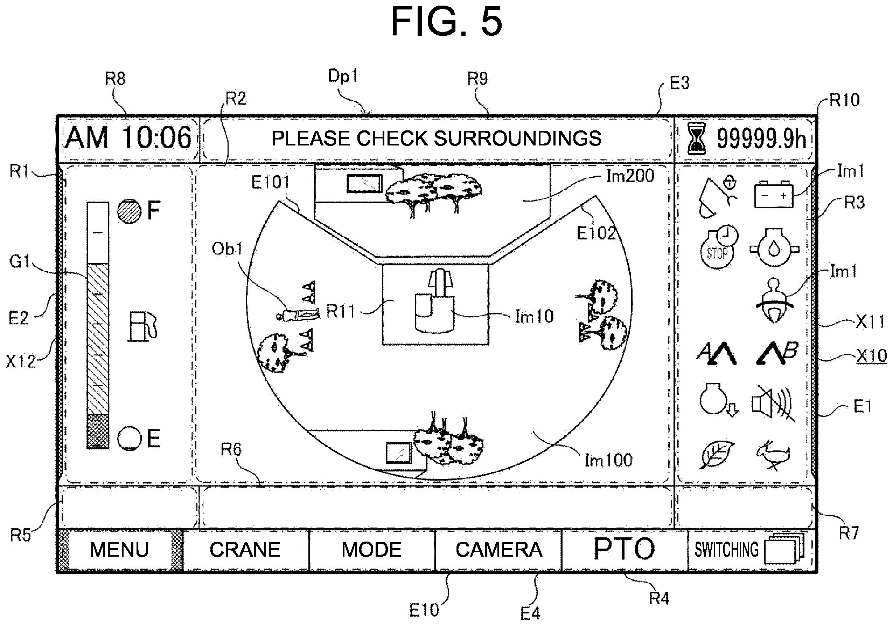

The display processor 11 executes display processing to display at least the display screen Dp1 on the display device 2. More specifically, the display processor 11 generates the display screen Dp1 on the basis of the data acquired by the image acquisition unit 14 and the like, controls the display device 2, and thereby displays the display screen Dp1 on the display unit 23 of the display device 2. Furthermore, the display processor 11 acts in response to the operation accepted by the operation unit 22 of the display device 2. The display processor 11 displays, on the display screen Dp1, captured image Im100 (see FIG. 5) that is captured by the left camera 341, the right camera 342, and the rear camera 343, for example. That is, the display processor 11 displays the image of the monitoring area A1 around the work machine 3 on the display device 2.

Here, the display processor 11 displays a detection object X10 (see FIG. 5), a display mode of which is changed according to the detection result of the detection target Ob1 by the detection processor 15, on the display screen Dp1. The term "object" such as the detection object X10 in the present disclosure includes a mark, a graphic image, a figure, a photograph, text, a moving image, and the like displayed in the display screen Dp1, and a combination thereof.

In this way, the user U1 (operator) can comprehend the detection result (the presence or the absence, or the like) of the detection target Ob1 in the monitoring area A1 by the detection object X10 that is displayed on the display screen Dp1. That is, the user U1 can visually check the detection result of the detection target Ob1, and can operate the work machine 3 after acknowledging the presence or the absence of the detection target Ob1 in the monitoring area A1, and the like.

By the way, in the present embodiment, the detection processor 15 acquires the detection result by the detector 5 on the outside of the control system 1 and executes the detection processing for the detection target Ob1 on the basis of the detection result. However, the detection processor 15 is not limited to this configuration. For example, the detection processor 15 may execute the detection processing for the detection target Ob1 in the monitoring area A1 on the basis of the output of the sensor 51 on the outside of the control system 1 and/or the imaging unit 52.

### [3] Work Machine Control Method

Hereinafter, a description will be mainly made on an example of a control method for the work machine 3 (hereinafter simply referred to as a "control method") that is executed by the control system 1 with reference to FIG. 5 to FIG. 9.

The control method according to the present embodiment is executed by the control system 1 that has the computer system as the main component, and thus, in other words, is embodied by the work machine control program (hereinafter simply referred to as a "control program"). That is, the control program according to the present embodiment is a computer program for causing the one or more processors to execute each processing related to the control method. Such a control program may be executed in cooperation by the control system 1 and the display device 2, for example.

Here, in the case where a particular start operation, which is set in advance to execute the control program, is performed, the control system 1 executes the following various types of processing related to the control method. The start operation is an activation operation of the engine of the work machine 3, or the like, for example. Meanwhile, in the case where a particular termination operation, which is set in advance, is performed, the control system 1 terminates the following various types of processing related to the control method. The termination operation is a stop operation of the engine of the work machine 3, or the like, for example.

### [3.1] Display Screen

Herein, a description will be firstly made on a configuration of the display screen Dp1 that is displayed on the display unit 23 of the display device 2 by the control method according to the present embodiment. In the drawings in FIG. 5 and the like, each of which illustrates the display screen Dp1 displayed on the display unit 23 of the display device 2, one-dot chain lines, leading lines, and reference signs representing the region are merely provided for an illustrative purpose, and are not actually displayed on the display device 2.

The display screen Dp1 illustrated in FIG. 5 is a home screen that is displayed first by the control method.

The home screen is a basic display screen Dp1 that is first displayed on the display device 2 while the work machine 3 is running. The display screen Dp1 can be shifted from the home screen to any of various display screens Dp1 including a menu screen, a crane screen, a mode screen, a PTO screen, and the like according to the operation on the operation unit 22.

As illustrated in FIG. 5, the display screen Dp1 includes a first region R1, a second region R2, a third region R3, a fourth region R4, a fifth region R5, a sixth region R6, a seventh region R7, an eighth region R8, a ninth region R9, and a tenth region R10. In the control method according to the present embodiment, for example, the captured image Im100 and the like of the monitoring area A1 are displayed in the second region R2 that occupies most of the display screen Dp1.

More specifically, the display screen Dp1 is divided into four regions in the vertical direction (up-down direction).

Each of the three regions from the top is further divided into three regions in the lateral direction (left-right direction). Thus, the display screen Dp1 is divided into a total of ten regions. The regions in the second row from the top are the first region R1, the second region R2, and the third region R3 in order from left to right. The region in the lowermost row is the fourth region R4. Furthermore, the regions in the third row from the top are the fifth region R5, the sixth region R6, and the seventh region R7 in order from left to right, and the regions in the uppermost row are the eighth region R8, the ninth region R9, and the tenth region R10 in order from left to right. Of the four regions into which the display screen Dp1 is divided in the vertical direction, the region in the second row from the top (region including the first region R1, the second region R2, and the third region R3) has the largest vertical size. Of the three regions into which the display screen Dp1 is divided in the lateral direction, the middle region (region including the second region R2, the sixth region R6, and the ninth region R9) has the largest lateral size.

However, the arrangement and the size of each of the regions are merely examples, and can be changed as appropriate. In addition, it is not essential that the regions are clearly divided by boundaries. For example, in the example of FIG. 5, while the second region R2 and the third region R3 are clearly separated by the boundary, no boundary is present between the first region R1 and the second region R2. As a matter of course, the first region R1 and the second region R2 may be clearly separated by a boundary.

The first region R1 is a rectangular region that is long in the vertical direction. In the first region R1, for example, remaining amount information G1 on a remaining amount of the fuel (for example, the light oil) for the engine is displayed. The display processor 11 generates the remaining amount information G1 in the display screen Dp1, for example, on the basis of output (a sensor signal) from a remaining amount sensor.

The second region R2 is a rectangular region that is long in the lateral direction. In the second region R2, the captured image Im100 of the monitoring area A1 is displayed. In the second region R2, a machine body object Im10, a captured image Im200 of the rear camera 343, and the like are further displayed.

The captured image Im100 is an overhead image that is generated by subjecting the image captured by the left camera 341, the image captured by the right camera 342, and the image captured by the rear camera 343 into coordinate transformations and synthesization. That is, the captured image Im100 is an image that is acquired by synthesizing an image of the small area A11 on the left side of the driving unit 321 captured by the left camera 341, an image of the small area A12 on the right side of the driving unit 321 captured by the right camera 342, and the image of the small area A13 on the rear side of the driving unit 321 captured by the rear camera 343 and that is displayed in the form that the monitoring area A1 is seen from the upper side of the machine body 30. The display processor 11 synthesizes the captured images acquired by the image acquisition unit 14 and displays the synthesized image in real time.

The machine body object Im10 is displayed in an 11th region R11 that is set at a center of the second region R2. In the present embodiment, as an example, the machine body object Im10 is a graphic image (icon) that imitates the machine body 30 seen from above. The captured image Im200 is an image of the small area A13 on the rear side of the driving unit 321 that is captured by the rear camera 343.

The third region R3 is a rectangular region that is in the vertical direction. In the third region R3, a graphic image (icon) Im1 that corresponds to the running state of each of the units of the work machine 3 is displayed. In the third region R3, the plural graphic images Im1 can be displayed, and each of the graphic images Im1 uses a design (pattern) to indicate, for example, the state of the battery, a seatbelt, the coolant temperature, the hydraulic oil temperature, or the like.

Here, each of the graphic images Im1 indicates the running state, depending on a display mode including a display color, a size, or the like, for example. The display processor 11 determines the state of each of the units of the work machine 3 by using the output of the various sensors (including the coolant temperature sensor and the hydraulic oil temperature sensor), each of which detects the running state of each of the units of the work machine 3. When an abnormal value is detected in any portion, the display processor 11 provides warning display by changing the display mode, such as the display color, of the graphic image Im1 of the respective portion, or the like.

The fourth region R4 is a band-shaped region that extends over an entire width of the display screen Dp1. In the fourth region R4, items for operations on the display screen Dp1 are displayed. In FIG. 5, as an example, six items of "MENU", "CRANE", "MODE", "CAMERA", "PTO", and "SWITCH" are arranged in this order from left to right in the fourth region R4. These six items are associated with the six push-button switches 221 to 226 in the operation unit 22 that are located directly below the six items. For example, the item "MENU" is associated with the push-button switch 221, and the item "CRANE" is associated with the push-button switch 222. Thus, for example, when the user U1 operates the push-button switch 224 that corresponds to the item "CAMERA" (see FIG. 4), the item "CAMERA" is operated (selected).

Furthermore, in the present embodiment, in the fourth region R4, one of the items is highlighted to respond to the operation of the operation dial (or a cursor key) in the operation unit 22, or the like.

In the example of FIG. 5, the item "MENU" is highlighted, and the highlighted item is switched by the operation of the operation dial (or the cursor key), or the like. While the desired item is highlighted, the user U1 can operate a determination button to select the desired item. Thus, for example, when the determination button is operated after the highlighted item is switched to the item "CAMERA", the item "CAMERA" is operated (selected). When the operation unit 22 includes the touch panel, the user U1 can perform the operation of touching the desired item on the display screen Dp1 to select the desired item.

In the fifth region R5, a warning display graphic image (icon) is displayed to indicate that the abnormal value has been detected by any of the various sensors (including the coolant temperature sensor and the hydraulic oil temperature sensor). In the sixth region R6, for example, information on the running work unit 33 in the work machine 3 is displayed. In the seventh region R7, for example, the information on the running state of the work machine 3, such as the engine speed, is displayed. In the eighth region R8, for example, current time is displayed. In the ninth region R9, for example, information on the item to which the currently displayed display screen Dp1 belongs is displayed. In the tenth region R10, for example, information on a running time (hour meter) of the work machine 3 is displayed.

Furthermore, the detection object X10, the display mode of which is changed according to the detection result of the detection target Ob1 by the detection processor 15, is displayed on the display screen Dp1. Here, the detection object X10 is arranged along an outer peripheral edge E10 of the display screen Dp1. The detection object X10 will be described in detail in the section "3.2 Details".

### [3.2] Details

Next, the control method according to the present embodiment will be described in detail.

The control method according to the present embodiment includes: detecting the detection target Ob1 in the monitoring area A1 around the work machine 3 (the detection processing); displaying the display screen Dp1 on the display device 2 (the display processing); and displaying the detection object X10, the display mode of which is changed according to the detection result of the detection target Ob1, on the display screen Dp1. The detection object X10 is arranged along the outer peripheral edge E10 of the display screen Dp1.

The term "arranged along the outer peripheral edge E10" in the present disclosure means that, in regard to at least one of a position and a shape of the detection object X10, the detection object X10 is arranged along the outer peripheral edge E10. More specifically, in regard to the position of the detection object X10, the detection object X10 opposes the outer peripheral edge E10, or no object is present between the detection object X10 and the outer peripheral edge E10. In this way, the detection object X10 is arranged along the outer peripheral edge E10. In regard to the shape of the outer peripheral edge E10, the outer peripheral edge E10 is elongated in a longitudinal direction of the outer peripheral edge E10. In this way, the detection object X10 is arranged along the outer peripheral edge E10.

In short, when the display screen Dp1 that includes the detection object X10 is displayed on the display device 2, the user U1 can determine the presence or the absence of the detection target Ob1 in the monitoring area A1 by checking the detection object X10 in the display screen Dp1. Here, the detection object X10 is arranged along the outer peripheral edge E10 of the display screen Dp1. Accordingly, the detection object X10 is displayed while not interfering with the other types of the information included in the display screen Dp1. In this way, the user U1 can comprehend the detection result of the detection target Ob1 by using the detection object X10 that is displayed at a position at which the detection object X10 naturally enters a field of view of the user U1 when the user U1 sees the display screen Dp1. Thus, the control method according to the present embodiment prevents degradation of a visual recognition property of the display screen Dp1.

Hereinafter, a further detailed description will be made on a display content of the detection object X10 on the display screen Dp1 with reference to FIG. 5 to FIG. 8.

As illustrated in FIG. 5, the detection object X10 includes a first object X11 and a second object X12. The first object X11 and the second object X12 are arranged symmetrically at least in one direction. In the present embodiment, as an example, the first object X11 and the second object X12 are arranged symmetrically in the left-right direction (lateral direction of the display screen Dp1) about the center of the display screen Dp 1. Here, each of the first object X11 and the second object X12 is a substantially linear object that is long in the up-down direction (vertical direction of the display screen Dp1), and is arranged in a central portion of the display screen Dp1 in the vertical direction.

In detail, each of the first object X11 and the second object X12 is formed in a substantially trapezoidal shape that has an inner side in the lateral direction of the display screen Dp1 as a short side and an outer side as a long side. That is, in regard to both of the positions and the shapes, the first object X11 and the second object X12 are symmetrical in the left-right direction (lateral direction of the display screen Dp1). Just as described, the visual recognition property of the detection object X10 is easily improved by the first object X11 and the second object X12 that are symmetrical in the one direction (left-right direction).

Here, the outer peripheral edge E10 of the display screen Dp1 includes a first vertical side E1 and a second vertical side E2 that oppose each other in the left-right direction (lateral direction) of the display screen Dp1. The first object X11 is arranged along the first vertical side E1, and the second object X12 are arranged along the second vertical side E2.

That is, the display screen Dp1 in the rectangular shape as a whole includes, in the outer peripheral edge E10: the first vertical side E1 and the second vertical side E2 that oppose each other in the left-right direction (lateral direction); and a first lateral side E3 and a second lateral side E4 that oppose each other in the up-down direction (vertical direction). In other words, the first vertical side E1, the second vertical side E2, the first lateral side E3, and the second lateral side E4 constitute a right side of the display screen Dp1, a left side of the display screen Dp1, an upper side of the display screen Dp1, and a lower side of the display screen Dp1, respectively. The first object X11 is arranged at a right end of the display screen Dp1 along the first vertical side E1, which is the right side of the display screen Dp1, and the second object X12 is arranged at a left end of the display screen Dp1 along the second vertical side E2, which is the left side of the display screen Dp1.

In this way, while the visual recognition properties of the first object X11 and the second object X12 are improved, the detection object X10 is unlikely to interfere with the other types of the information included in the display screen Dp1.

The display screen Dp1 has an information presenting region on at least one side in the up-down direction (vertical direction) of the detection object X10. In the present embodiment, the first object X11 is arranged on the right side of the third region R3 in the display screen Dp1, and the second object X12 is arranged on the left side of the first region R1 in the display screen Dp1. Accordingly, the tenth region R10 and the eighth region R8 are respectively located above the first object X11 and the second object X12, and the seventh region R7 and the fifth region R5 are respectively located under the first object X11 and the second object X12. Thus, the fifth region R5, the seventh region R7, the eighth region R8, and the tenth region R10 are examples of the information presenting region located on both sides in the up-down direction (vertical direction) of the detection object X10.

With such a configuration, the detection object X10 naturally enters the field of view of the user U1 when the user U1 sees the various types of the information displayed in the information presenting regions (the fifth region R5, the seventh region R7, the eighth region R8, and the tenth region R10). Thus, the visual recognition property of the detection object X10 is easily improved.

The control method according to the present embodiment further includes displaying the captured image Im100 of the monitoring area A1 at a position between the first object X11 and the second object X12 in the display screen Dp1. That is, in the present embodiment, the captured image Im100 of the monitoring area A1 is displayed in the second region R2 that is located in the central portion of the display screen Dp1. This allows the user U1 to visually recognize the situation in the monitoring area A1 on the display screen Dp1.

Here, as illustrated in FIG. 5, the captured image Im100 is a fan-shaped image having an arc-shaped contour on a far side from the machine body 30. The term "arc-shaped" in the present disclosure is not limited to an arc constituting a part of a perfect circle, and includes a line curved outward in general. Thus, although the contour line of the captured image Im100 includes the lines curved outward as a whole, the captured image Im100 can be considered as the fan-shaped image having the arc-shaped contour. Here, the captured image Im100 is the fan-shaped image in which a portion of the arc on the upper side in the display screen Dp1 is cut out, and is the image of (each of the small areas A11, A12, A13) the monitoring area A1 in which a left portion, a right portion, and a lower portion of the image respectively correspond to the left side, the right side, and the rear side of the machine body 30.

That is, on the display screen Dp1, the captured image Im100 is displayed in the state where at least the contours of the portions corresponding to the monitoring area A1 on the left side, the right side, and the rear side of the work machine 3 are formed in the arc shape.

In detail, the captured image Im100 has such a fan shape that, when a virtual circle that is centered on a reference point located near the center of the second region R2 is set, an excluded range from a first end E101 to a second end E102 as a circumferential part of the virtual circle, is cut out. In the example of FIG. 5, on the display screen Dp1, the captured image Im100 has: the linear first end E101 that extends upward to the left from the reference point; and the linear second end E102 that extends upward to the right from the reference point.

As illustrated in FIG. 5, the machine body object Im10 is arranged in an apex portion of the captured image Im100. That is, the machine body object Im10 is arranged at a position on the reference point, which corresponds to an apex angle of the fan-shaped captured image Im100. In other words, the control method according to the present embodiment further includes displaying the machine body object Im10 at the reference point in the display screen Dp1.

In the present embodiment, the upper side of the machine body object Im10 corresponds to the front side of the machine body 30 in a real space, the lower side of the machine body object Im10 corresponds to the rear side of the machine body 30 in the real space, the right side of the machine body object Im10 corresponds to the right side of the machine body 30 in the real space, and the left side of the machine body object Im10 corresponds to the left side of the machine body 30 in the real space. More specifically, the lower portion of the machine body object Im10 is formed in the arc shape that imitates a rear portion (counterweight) of the turning unit 32, and the upper portion of the machine body object Im10 is formed in the shape that imitates a front portion (work unit 33) of the turning unit 32. In the present embodiment, the work unit 33 is arranged at a position that is offset to the right from the center of the turning unit 32 in the left-right direction D3, and the driving unit 321 is arranged at a position that is offset to the left from the center of the turning unit 32 in the left-right direction D3. Thus, in the machine body object Im10, a figure that imitates the work unit 33 is located in an upper right portion, and a figure that imitates the driving unit 321 is located in a left portion.

In the present embodiment, the machine body object Im10 is displayed not with an orientation of the travel unit 31 but with an orientation of the turning unit 32, on which the driving unit 321 is mounted, being a reference. That is, when the turning unit 32 turns relative to the travel unit 31, the direction that corresponds to the upper side of the machine body object Im10 in the real space is changed. In this way, the upper side of the machine body object Im10 constantly corresponds to the front side of the turning unit 32, which is located on the front side as seen by the operator seated in the driving unit 321.

Here, the direction of the machine body 30 represented by the machine body object Im10 matches the direction of the captured image Im 100 that is seen from the machine body 30. That is, both the front side of the machine body 30, which is simulated by the machine body object Im10, and the front side in the captured image Im 100 are directed upward in the display screen Dp1. This makes it easier for the operator to intuitively comprehend the position of the detection target Ob1 by looking at the captured image Im100. However, the present disclosure is not limited to this example, and the machine body object Im10 may be arranged at a position other than the apex angle of the captured image Im100, for example, on the lower side of the captured image Im100.

The captured image Im200 by the rear camera 343 is arranged in the excluded range between the first end E101 and the second end E102 in the circumferential direction of the virtual circle. That is, the captured image Im200 is arranged above the captured image Im100 in the display screen Dp1. In the present embodiment, as an example, the captured image Im200 has a pentagonal outer shape that includes two sides along the first end E101 and the second end E102. In this way, the captured image Im200 of the small area A13, which is located on the rear side of the driving unit 321 and is captured by the rear camera 343, can be displayed by using a dead space in the second region R2.

Furthermore, in the present embodiment, the detection target Ob1 in the monitoring area A1 is set as the detection target by the detector 5. Thus, in the case where the detection target Ob1 is present in the monitoring area A1, the detection target Ob1 is naturally captured in the captured image Im100 of the monitoring area A1. Just as described, when the detection result indicates the presence of the detection target Ob1 in the monitoring area A1, at least a part of the detection target is captured in the captured image Im100 on the display screen Dp1. This allows the user U1 to check the detection target Ob1 in the captured images Im100. That is, on the display screen Dp1 displayed in the display device 2, the operator (user U1) can check the situations on the lateral side, the rear side, and the like of the work machine 3, which are likely to be blind spots from the driving unit 321. Thus, in the case where the detection target Ob1 is present in the monitoring area A1, the detailed situation of the detection target Ob1 can be easily comprehended on the display screen Dp1.

The control method according to the present embodiment further includes displaying first state information on the state of the work machine 3 at a position between the first object X11 and the captured image Im100 on the display screen Dp1. In the present embodiment, the third region R3 is located between the first object X11 and the captured image Im100. Accordingly, a graphic image Im1 that corresponds to the running state of each unit of the work machine 3 and is displayed in the third region R3 is an example of the first state information.

With such a configuration, when the user U1 sees the first state information (graphic image Im1), the first object X11 naturally enters the field of view of the user U1, and thus the visual recognition property of the detection object X10 is improved.

The control method according to the present embodiment further includes displaying second state information on the state of the work machine 3 at a position between the second object X12 and the captured image Im100 on the display screen Dp1. The second state information includes various types of information on the state of the work machine 3, and is different information from the first state information (graphic image Im1). In the present embodiment, the first region R1 is located between the second object X12 and the captured image Im100. Accordingly, the remaining amount information G1 on the remaining amount of the fuel for the engine, which is displayed in the first region R1, is an example of the second state information.

With such a configuration, when the user U1 sees the second state information (remaining amount information G1), the second object X12 naturally enters the field of view of the user U1, and thus the visual recognition property of the detection object X10 is improved.

By the way, the detection object X10 is an object, a display mode of which is changed according to the detection result of the detection target Ob1. In the present embodiment, the display mode of the detection object X10 at least includes one of a display color, a size, and a shape of the detection object X10. That is, at least one of the display color, the (display) size, and the shape of the detection object X10 is changed according to the detection result of the detection target Ob1.

Here, there are at least two types of the display mode of the detection object X10 that are: the display mode during a "non-detection" time in which the detection target Ob1 is not present in the monitoring area A1; and the display mode during a "detection" time in which the detection target Ob1 is present in the monitoring area A1. Furthermore, the display mode of the detection object X10 is preferably changed by the distance from the work machine 3 to the detection target Ob1 and/or the direction of the detection target Ob1 (that is, the position of the detection target Ob1). Accordingly, even during the "detection" time, in which the detection target Ob1 is present in the monitoring area A1, the display mode of the detection object X10 further differs between a case where the distance from the work machine 3 to the detection target Ob1 is long and a case where the distance from the work machine 3 to the detection target Ob1 is short.

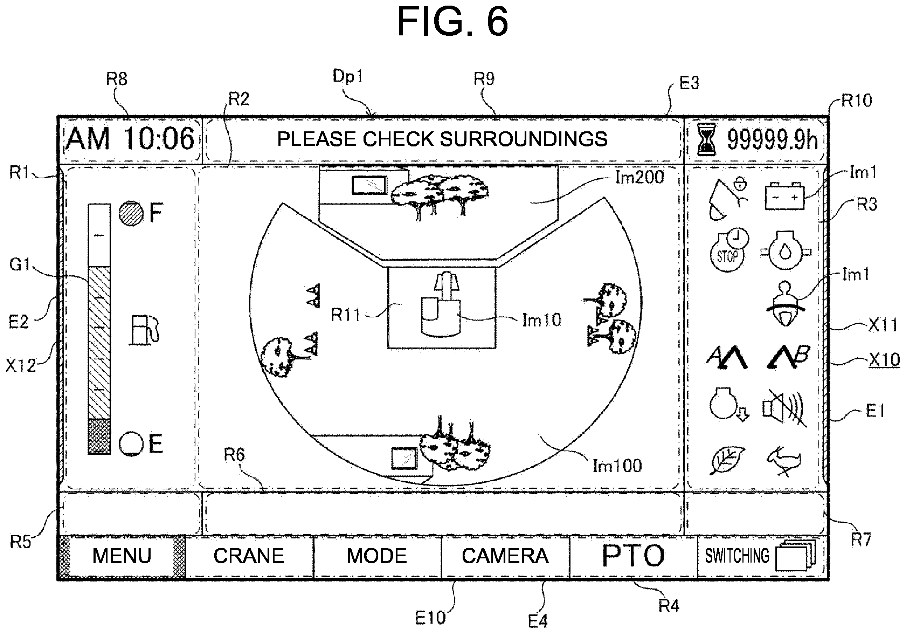

In the present embodiment, as an example, the display mode of the detection object X10, which is changed according to the detection result of the detector 5, includes the display color and the like of the detection object X10, for example. In this case, the display color of the detection object X10 on the display screen Dp1 is changed according to the detection result by the detector 5. For example, as illustrated in FIG. 5, in the case where the detection target Ob1 is present in the monitoring area A1, the display color of the detection object X10 becomes "yellow" or "red". Meanwhile, as illustrated in FIG. 6, in the case where the detection target Ob1 is not present in the monitoring area A1, the display color of the detection object X10 becomes "green".

In addition, as the detection target Ob1 is located close to the machine body 30, the display mode of the detection object X10 is changed to a conspicuous display color. As an example, when the detection target Ob1 approaches the machine body 30, the display color of the detection object X10 is changed from yellow to red.

Furthermore, the display mode of the detection object X10, which is changed according to the detection result by the detector 5, may include at least one of the size and the shape, in addition to or instead of the display color of the detection object X10. For example, the display mode of the detection object X10 may be changed such that, as the detection target Ob1 is close to the machine body 30, the size of the detection object X10 is increased.

Just as described, by changing at least one of the display color, the size, the shape, and the position of the detection object X10 according to the detection result by the detector 5, the user U1 can intuitively comprehend the presence of the detection target Ob1 (for example, the person) in the monitoring area A1 by the display mode of the detection object X10.

Here, there is a case where the plural detection targets Ob1 are simultaneously present in the monitoring area A1. In this case, the display mode of the detection object X10 is preferably determined according to the position of the detection target Ob1, which is the closest to the machine body 30 of the work machine 3 of the plural detection targets Ob1. For example, in the case where the detection target Ob1 that is present at a location within a threshod distance from the work machine 3 and the detection target Ob1 that is present at a location farther than the threshold distance from the work machine 3 are simultaneously detected, the display mode of the detection object X10 is determined on the basis of the detection target Ob1 that is present within the threshold distance from the work machine 3. Just as described, since the display mode of the detection object X10 is determined according to the detection result of the detection target Ob1 with the highest urgency, the operator can easily and intuitively comprehend the detection result.

However, in the present embodiment, the display position of the detection object X10 in the display screen Dp1 is fixed regardless of the detection result of the detection target Ob1. That is, the display position of the detection object X10 in the display screen Dp1 is not changed, and the detection object X10 is constantly arranged along the outer peripheral edge E10 of the display screen Dp1. Thus, the visual recognition property of the detection object X10 is improved for the user U1.

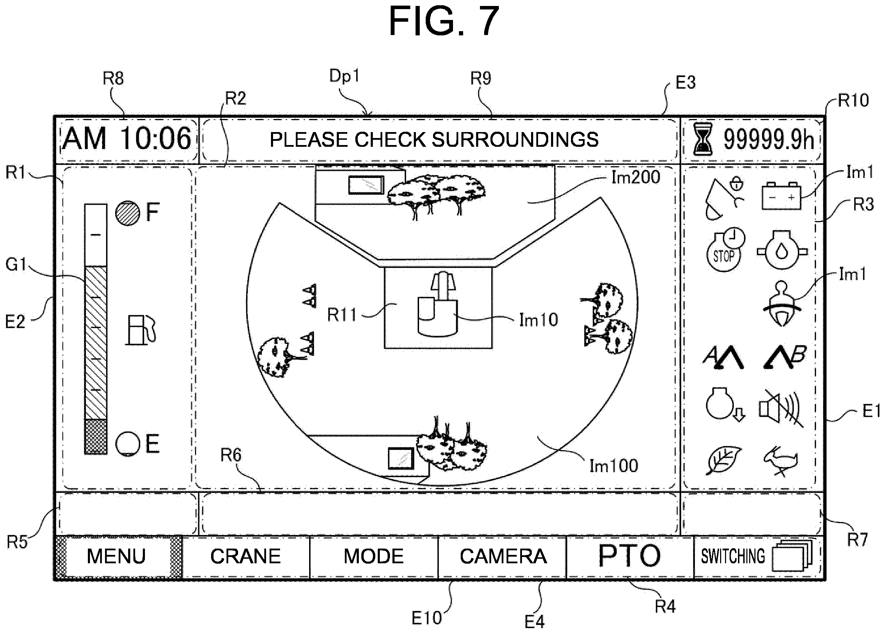

In addition, in the present embodiment, in the case where the detection target Ob1 is detectable, the detection object X10 is displayed on the display screen Dp1. For example, in the case where the detection processor 15 is enabled by the switching processor 13, as illustrated in FIG. 5 or FIG. 6, the detection object X10 is displayed on the display screen Dp1. Meanwhile, in the case where the detection processor 15 is disabled by the switching processor 13, as illustrated in FIG. 7, the detection object X10 is not displayed on the display screen Dp1. In this way, the user U1 can intuitively comprehend, on the display screen Dp1, whether the detection processor 15 is enabled.

Furthermore, in the present embodiment, in the case where the work machine 3 is inoperable by the cutoff lever 354, the detection object X10 is not displayed. That is, not only in the case where the detection processor 15 is disabled, but also in the case where the cutoff lever 354 is at the "up position" and the output of the hydraulic actuator is forcibly stopped regardless of the operation of the operation lever, as illustrated in FIG. 7, the detection object X10 is not displayed on the display screen Dp1. In this way, the user U1 can intuitively comprehend, on the display screen Dp1, the operation state of the cutoff lever 354.

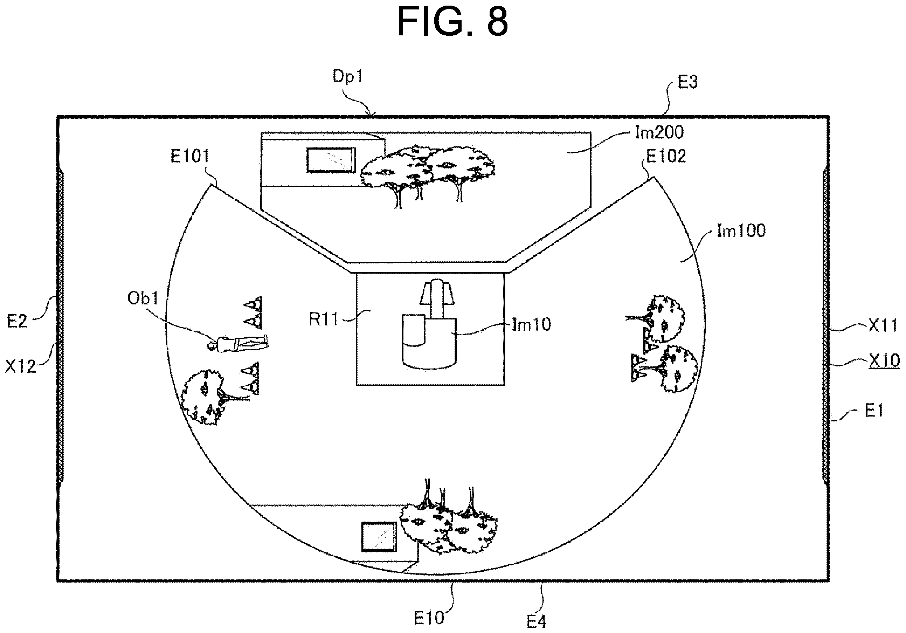

Moreover, in the present embodiment, in the case where the push-button switch 224, which corresponds to the item "CAMERA", is operated or the like, and the item "CAMERA" is thereby operated (selected) while the display screen Dp1 as illustrated in FIG. 5 is displayed, the display mode of the display screen Dp1 is shifted to a full screen mode as illustrated in FIG. 8. When any of the items is operated (selected) in the full screen mode, the display mode of the display screen Dp1 is shifted from the full screen mode to a normal mode as illustrated in FIG. 5. However, the operation for shifting the display screen Dp1, an order of shifting, and the like are not limited to those in the above example and can be changed appropriately.

In the full screen mode, compared to the display screen Dp1 illustrated in FIG. 5, the display screen Dp1 is a screen in which the second region R2 displaying the captured image Im100 is enlarged. In the example illustrated in FIG. 8, the display screen Dp1 only includes the second region R2. That is, in the full screen mode, the first region R1, the third region R3, and the like are not displayed, and the captured image Im100 is enlarged in the entire region of the display screen Dp1. Just as described, the display screen Dp1 has the plural display modes.

Here, the display mode of the detection object X10 is not changed even when the display mode of the display screen Dp1 is changed. That is, as described above, even when the display mode of the display screen Dp1 is shifted between the normal mode (see FIG. 5) and the full screen mode (see FIG. 8), the display mode (including the display position) of the detection object X10 is not changed. Thus, the visual recognition property of the detection object X10 is improved for the user U1.

### [3.3] Overall Processing

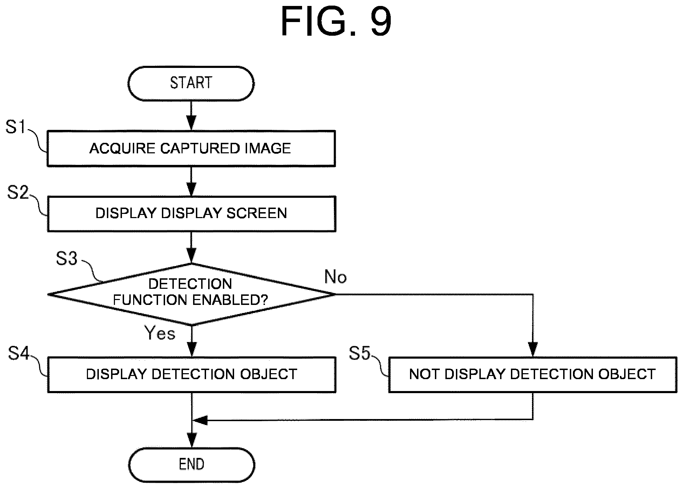

Next, a description will be made on an overall flow of processing related to the control method with reference to FIG. 9. FIG. 9 is a flowchart illustrating an example of the processing related to the control method.

As illustrated in FIG. 9, the image acquisition unit 14 of the control system 1 acquires the captured images from the left camera 341, the right camera 342, and the rear camera 343 (S1). Then, the display processor 11 of the control system 1 displays the display screen Dp1 including the captured image Im100 on the display device 2 (S2).

Here, the display processor 11 of the control system 1 determines whether the detection processor 15 is enabled or disabled by the switching processor 13 (S3). If the detection processor 15 is enabled (S3: Yes), the display processor 11 displays the detection object X10 along the outer peripheral edge E10 of the display screen Dp1 (S4). On the other hand, if the detection processor 15 is disabled (S3: No), the display processor 11 does not display the detection object X10 (S5).

The control system 1 repeatedly executes the processing in above steps S1 to S5. In this way, the display screen Dp1 is displayed on the display device 2 at any time. However, the flowchart illustrated in FIG. 9 is merely one example. The processing may be added or omitted appropriately, or the order of the processing may be changed appropriately.

### [4] Modified Examples

Hereinafter, modified examples of the first embodiment will be listed. The modified examples, which will be described below, can be applied in appropriate combinations.

The control system 1 in the present disclosure includes the computer system. The computer system has, as the main components, the one or more processors and the one or more pieces of the memory as the hardware. When the processor executes the program that is stored in the memory of the computer system, the function as the control system 1 in the present disclosure is implemented. The program may be recorded in advance in the memory of the computer system, may be provided through an electric communication line, or may be recorded and provided in a non-transitory recording medium, such as a memory card, an optical disc, or a hard disk drive, that can be read by the computer system. Some or all of the functional units included in the control system 1 may be configured by an electronic circuit.

The configuration that at least some of the functions of the control system 1 are consolidated in the single casing is not essential. The components of the control system 1 may be separately provided in the plural casings. On the contrary, the functions that are separately provided in the plural devices (for example, the control system 1 and the display device 2) in the first embodiment may be consolidated in the single casing. Furthermore, at least some of the functions of the control system 1 may be implemented on the cloud (by cloud computing) or the like.

The power source of the work machine 3 is not limited to the diesel engine. For example, the power source of the work machine 3 may be the engine other than the diesel engine, a motor (electric motor), or a hybrid power source including the engine and the motor (electric motor).

The display device 2 is not limited to the dedicated device. For example, the display device 2 may be a general-purpose terminal such as a laptop computer, a tablet terminal, or a smartphone. Furthermore, the display unit 23 is not limited to the mode that directly displays the display screen, such as the liquid-crystal display or the organic EL display. For example, the display unit 23 may be configured to display the display screen by projection, such as a projector.

As an information input mode of the operation unit 22, a mode other than the push-button switch, the touch panel, the operation dial, and the like may be employed. For example, the operation unit 22 may employ an input mode using a keyboard or a pointing device such as a mouse, a voice input mode, a gesture input mode, an input mode of an operation signal from another terminal, or the like.

The restriction processing executed by the restriction processor 122 only needs to be the processing to restrict the motion of the work machine 3, and is not limited to the processing to prohibit (disable) the motion (turning motion and the like) of the work machine 3. The restriction processing may be, for example, processing to decelerate the motion (turning motion and the like) of the work machine 3, processing to reduce a motion range (turning angle and the like) of the work machine 3, processing to restrict an allowable area for the motion of the work machine 3, or the like.

It is not essential that the restraint processing includes the plural types of the specific processing (sound output processing, restriction processing, and the like) for restraining the motion of the work machine 3. Furthermore, even in the case where the restraint processing includes the plural types of the specific processing, it is not essential that the enabled state and the disabled state are independently switched per specific processing, and the enabled state and the disabled state may be switchable for the plural types of the specific processing all at once.

The function related to the restraint processing by the restraint processor 12 is not essential in the first place, and thus the restraint processor 12 can be omitted appropriately.

The detector 5 for detecting the detection target Ob1 in the monitoring area A1 around the work machine 3 may include, in addition to or instead of the sensor 51 and the imaging unit 52, a sensor such as a motion sensor, a sonar sensor, a radar, or a light detection and ranging (LiDAR) sensor.

The detection processor 15 may detect the detection target Ob1 in the monitoring area A1 on the basis of the output (image data) of the left camera 341, the right camera 342, and the rear camera 343, for example. More specifically, the detection processor 15 subjects the image data acquired by the image acquisition unit 14 to the image processing and thereby extracts a characteristic amount in the image. Then, based on the characteristic amount, the detection processor 15 determines whether the detection target Ob1 ("person" in the present embodiment) is captured in the image. Here, in the case where the detection target Ob1 is captured in the image, the detection processor 15 determines whether the detection target Ob1 is captured in the image captured by the left camera 341, the right camera 342, or the rear camera 343. That is, the detection processor 15 determines whether the detection target Ob1 is present in the small area A11, the image of which is captured by the left camera 341, the small area A12, the image of which is captured by the right camera 342, or the small area A13, the image of which is captured by the rear camera 343, and thereby detects the detection target Ob1.

The cameras that capture the captured image Im 100 are not limited to the left camera 341, the right camera 342, and the rear camera 343, and may include one, two, four, or more cameras (image sensors). Furthermore, for example, the image may be captured by a camera capable of capturing an image in all directions as seen from the work machine 3, such as a half celestial sphere camera (360-degree camera).

The detection target Ob1 may include, in addition to or instead of the "person", a moving object such as a vehicle (including another work machine), a structure such as a wall or a pillar, a plant, an animal, a step, a trench, or another obstacle.

It is not essential to reflect the positional relationship of the monitoring area A1 with the work machine 3 in the real space to the positional relationship of the captured image Im100 with the machine body object Im10 on the display screen Dp1. Furthermore, it is not essential to reflect the positional relationship of the monitoring area A1 with the turning unit 32 in the real space to the positional relationship of the captured image Im100 with the machine body object Im10 on the display screen Dp1.

It is not essential that the display mode of the detection object X10 is changed according to the position of the detection target Ob1.

### (Second Embodiment)

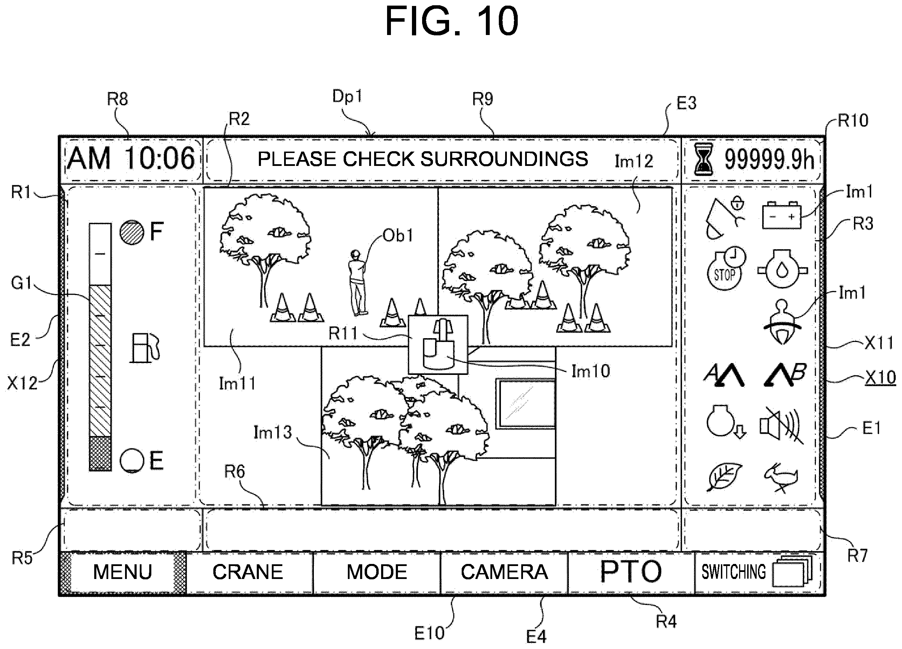

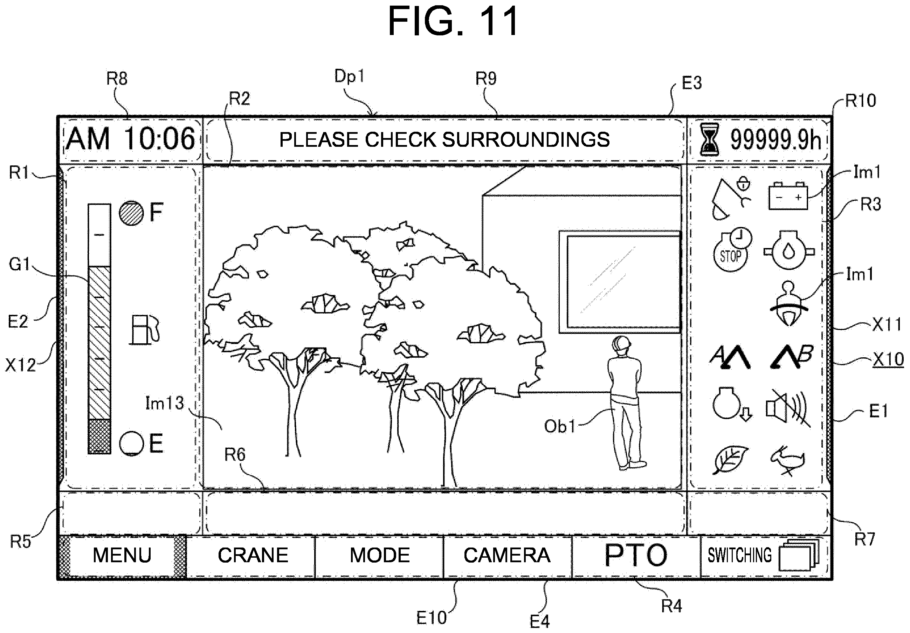

As illustrated in FIG. 10 and FIG. 11, the work machine 3 according to the present embodiment differs from the work machine 3 according to the first embodiment in display contents of the second region R2 in the display screen Dp1. Hereinafter, the same components as those in the first embodiment will be denoted by the same reference signs, and the description thereon will not be made.

In the present embodiment, the captured image that is displayed in the second region R2 is an image that is captured by at least one of the left camera 341, the right camera 342, and the rear camera 343 (that is, an image that is not synthesized).

In the example of FIG. 10, a captured image Im 11 of the small area A11 captured by the left camera 341, a captured image Im12 of the small area A12 captured by the right camera 342, and a captured image Im13 of the small area A13 captured by the rear camera 343 are displayed in the second region R2. In this example, the captured image Im11 and the captured image Im12 are aligned in the left-right direction in the second region R2, and the captured image Im13 is arranged under the captured image Im11 and the captured image Im12 in the second region R2.

In the example of FIG. 11, the captured image Im13 of the small area A13 captured by the rear camera 343 is displayed in the second region R2. In this example, the machine body object Im10 is not displayed.

The configuration according to the second embodiment can be employed by being appropriately combined with the various configurations (including the modified examples) that have been described in the first embodiment.

### [Supplementary Notes of the Invention]

Hereinafter, the summary of the invention extracted from the above-described embodiments will be additionally described. Configurations and processing functions described in the following supplementary notes can be selected and combined as appropriate.

### <Supplementary Note 1>

The work machine control method includes:
detecting the detection target in the monitoring area around the work machine;
displaying a display screen on a display device; and
and displaying, on the display screen, the detection object, the display mode of which is changed according to a detection result of the detection target, in which
the detection object is arranged along the outer peripheral edge of the display screen.

### <Supplementary Note 2>

The work machine control method according to Supplementary Note 1, in which
in the case where the detection target is in a detectable state, the detection object is displayed on the display screen.

### <Supplementary Note 3>

The work machine control method according to Supplementary Note 2, in which
in the case where the work machine is in an inoperable state by a cutoff lever, the detection object is not displayed.

### <Supplementary Note 4>

The work machine control method according to any one of Supplementary Notes 1 to 3, in which
the display position of the detection object on the display screen is fixed regardless of the detection result of the detection target.

### <Supplementary Note 5>

The work machine control method according to any one of Supplementary Notes 1 to 4, in which
the detection object includes a first object and a second object that are arranged symmetrically at least in one direction.

### <Supplementary Note 6>

The work machine control method according to Supplementary Note 5, in which
the outer peripheral edge includes a first vertical side and a second vertical side that oppose each other in a left-right direction of the display screen,
the first object is arranged along the first vertical side, and
the second object is arranged along the second vertical side.

### <Supplementary Note 7>

The work machine control method according to Supplementary Note 6, in which
the display screen has an information presenting region on at least one side in the up-down direction of the detection object.

### <Supplementary Note 8>

The work machine control method according to any one of Supplementary Notes 5 to 7 further including:
displaying the captured image of the monitoring area at the position between the first object and the second object on the display screen.

### <Supplementary Note 9>

The work machine control method according to Supplementary Note 8 further includes:
displaying first state information on the state of the work machine at the position between the first object and the captured image on the display screen.

<Supplementary Note 10>

The work machine control method according to Supplementary Note 8 or 9 further includes:
displaying second state information on the state of the work machine at the position between the second object and the captured image on the display screen.

### <Supplementary Note 11>

The work machine control method according to any one of Supplementary Notes 1 to 10, in which
the display mode of the detection object at least includes the display color, the size, and the shape of the detection object.

### <Supplementary Note 12>

The work machine control method according to any one of Supplementary Notes 1 to 11, in which
the display mode of the detection object is not changed even when the display mode of the display screen is changed.

### <Supplementary Note 13>

The work machine control program for causing the one or more processors to execute
the work machine control method according to any one of Supplementary Notes 1 to 12.

### REFERENCE SIGNS LIST

1: Work machine control system
2: Display device
3: Work machine
11: Display processor
15: Detection processor
30: Machine body
A1: Monitoring area
Dp1: Display screen
E10: Outer peripheral edge
E1: First vertical side
E2: Second vertical side
G 1: Remaining amount information (second state information)
Im 1: Graphic image (first state information)
Im 11, Im 12, Im 13, Im 100: Captured image
Ob 1: Detection target
R5: Fifth region (information presenting region)
R7: Seventh region (information presenting region)
R8: Eighth region (information presenting region)
R10: Tenth region (information presenting region)
X10: Detection object
X11: First object
X12: Second object

## Claims

1. A work machine control method comprising:
detecting a detection target in a monitoring area around a work machine;
displaying a display screen on a display device; and
displaying, on the display screen, a detection object, a display mode of which is changed according to a detection result of the detection target, wherein
the detection object is arranged along an outer peripheral edge of the display screen.

2. The work machine control method according to claim 1, wherein
in the case where the detection target is in a detectable state, the detection object is displayed on the display screen.

3. The work machine control method according to claim 2, wherein
in the case where the work machine is in an inoperable state by a cutoff lever, the detection object is not displayed.

4. The work machine control method according to any one of claims 1 to 3, wherein
a display position of the detection object on the display screen is fixed regardless of the detection result of the detection target.

5. The work machine control method according to any one of claims 1 to 3, wherein
the detection object includes a first object and a second object that are arranged symmetrically at least in one direction.

6. The work machine control method according to claim 5, wherein
the outer peripheral edge includes a first vertical side and a second vertical side that oppose each other in a left-right direction of the display screen,
the first object is arranged along the first vertical side, and
the second object is arranged along the second vertical side.

7. The work machine control method according to claim 6, wherein
the display screen has an information presenting region on at least one side in an up-down direction of the detection object.

8. The work machine control method according to claim 5 further comprising:
displaying a captured image of the monitoring area at a position between the first object and the second object on the display screen.

9. The work machine control method according to claim 8 further comprising:
displaying first state information on a state of the work machine at a position between the first object and the captured image on the display screen.

10. The work machine control method according to claim 8 further comprising:
displaying second state information on a state of the work machine at a position between the second object and the captured image on the display screen.

11. The work machine control method according to any one of claims 1 to 3, wherein
the display mode of the detection object includes at least one of a display color, a size, and a shape of the detection object.

12. The work machine control method according to any one of claims 1 to 3, wherein
the display mode of the detection object is not changed even when a display mode of the display screen is changed.

13. A work machine control program for causing one or more processors to execute
the work machine control method according to any one of claims 1 to 3.

14. A work machine control system comprising:
a detection processor that detects a detection target in a monitoring area around a work machine; and
a display processor that displays a display screen on a display device, wherein
the display processor displays a detection object, a display mode of which is changed according to a detection result of the detection target, on the display screen, and
the detection object is arranged along an outer peripheral edge of the display screen.

15. A work machine comprising:
the work machine control system according to claim 14; and
a machine body on which the display device is mounted.
